# EUROPÄISCHE PATENTSCHRIFT

(11) **EP 0 661 153 B1**
(45) Veröffentlichungstag und Bekanntmachung des Hinweises auf die Patenterteilung: **22.07.1998**
(21) Anmeldenummer: 94119953.1
(22) Anmeldetag: 16.12.1994
(51) Int. Cl.: B32B 7/08, D06N 5/00, B32B 15/14, B32B 15/20, B32B 3/24, E04D 5/10

(54) **Wurzelfeste Trägereinlage**
Lining material resistant to plant roots for attachment to a substrate
Matériau de garnissage résistant au percement des racines pour fixation sur un substrat

(30) Priorität: 27.12.1993 DE 4344707
(43) Veröffentlichungstag der Anmeldung: 05.07.1995
(73) Patentinhaber: HOECHST AKTIENGESELLSCHAFT, 65929 Frankfurt am Main (DE)
(72) Erfinder: Kaulich, Franz, D-86399 Bobingen (DE)
(74) Vertreter: Luderschmidt, Schüler & Partner GbR

(56) Entgegenhaltungen:
- EP-A- 0 006 189
- EP-A- 0 347 795
- EP-A- 0 497 338
- AT-A- 369 474
- DE-U- 8 527 113
- DE-U- 9 217 045
- FR-A- 2 669 229

## Beschreibung

Die vorliegende Erfindung betrifft eine mehrschichtige Trägereinlage, die aus mindestens einer textilen Schicht und mindestens einer Metalleinlage besteht, die durch Nadelung miteinander verbunden sind. Die erfindungsgemäße Trägereinlage eignet sich insbesondere zur Herstellung von bituminierten Dach-und Abdeckbahnen sowie als wurzelfeste Trägereinlage, besonders bei sogenannten Gründächern, d. h. Flachdächern mit einer bepflanzten Erdschicht, und als Abdichtmaterial von Erdbecken und Deponien.

Der zunehmende Einsatz von textilen Materialien zur Abdichtung von Erdbecken und die zunehmende Neigung, Dächer und andere geeignete Gebäudeteile zu begrünen, macht es erforderlich, die bisher z. B. als Dichtungsmaterial an diesen Stellen eingesetzten Materialien zusätzlich wurzelfest zu machen, d. h. ihnen einen solchen Aufbau oder eine solche Ausrüstung zu geben, daß die Pflanzenwurzeln keine Möglichkeit zum Ein- und Durchdringen haben. Bei der bekannten Aggressivität und Sprengkraft von Pflanzenwurzeln führt ein solches Ein- und Durchdringen der Pflanzenwurzeln nicht nur zur Zerstörung des verwendeten Materials selbst, sondern setzt auch alle darunter liegenden Gebäudeteile dem Angriff dieser Pflanzenwurzeln aus.

Insbesondere beim Begrünen von Dächern und anderen hierfür geeigneten Gebäudeteilen ist ein Material erforderlich, das nicht nur das Eindringen von Feuchtigkeit verhindert, sondern auch wurzelfest ist. Die bisher im großen Umfang verwendeten üblichen bituminierten Dachbahnen sind jedoch nicht ausreichend wurzelfest.

Darüber hinaus werden an das Brandverhalten von Baustoffen und Bauteilen von Bedachungen verschiedene Anforderungen gestellt. Dach- und Abdichtbahnen, als Bestandteil von Bedachungen, müssen sich u. a. durch eine Widerstandsfähigkeit gegen Flugfeuer und strahlende Wärme auszeichnen. Durch diese Widerstandsfähigkeit soll die Ausbreitung des Feuers auf dem Dach und eine Brandübertragung vom Dach in das Innere des Gebäudes verhindert werden.

Aus dem deutschen Gebrauchsmuster G 8527113 ist eine wurzelfeste Vliesbahn bestehend aus natürlichen oder synthetischen Fasern oder Filamenten bekannt, welche durch ein Bindemittel verfestigt werden. Nachteilig ist, daß diese wurzelfeste Vliesbahn eine unzureichende Widerstandsfähigkeit gegen Flugfeuer und strahlende Wärme aufweist.

Aus CA-A-1011250 sind Granulate bekannt, mit deren Hilfe das Algenwachstum auf Dachflächen verhindert werden kann. Diese Granulate enthalten üblicherweise 0,1 bis 2 Gew.-% Kupfersilikat, welches als Biocid wirkt. Diese Biocide beeinträchtigen jedoch auch den bei sogenannten Gründächern erwünschten Pflanzenwuchs.

Aus EP-A-0570694 sind wurzelfeste, bituminöse Dichtungsbahnen bekannt, die ein mit Kupfer bedampftes, flächiges Fasergebilde enthalten. Nachteilig ist, daß die Herstellung dieser kupferbedampften Fasergebilde nur relativ aufwendig zu realisieren ist.

Dachbahnen aus einem Vliesstoff und einer Metallfolie und ihre Herstellverfahren sind bereits aus der EP-A-0006189 bekannt und werden erhalten, indem auf einem schrumpffähigen Vliesstoff eine Metallfolie punktförmig befestigt wird. Dadurch soll eine Fältelung der Metallfolie erreicht werden, die bei einer Dehnung des geschrumpften Vlieses ein Reißen der Metallfolie verhindern soll. Die punktförmige Befestigung zwischen Vliesstoff und Metallfolie erfolgt auf mechanische Weise, z. B. mit Hilfe eines Nadelstuhls oder auf thermische Weise, beispielsweise durch Verkleben der in der Hitze an ihrer Oberfläche weichgewordenen Fasern; oder die Befestigung erfolgt durch Binder oder Kleber.

Die Metallfolie ist so beschaffen, daß ihr Erweichungs- und Schmelzpunkt möglichst hoch liegt und sie bei lokalem Flugfeuer als unversehrte Schicht erhalten bleibt. Dadurch wird die Ausbreitung des Brandes in die unteren Schichten der Dachbahn verhindert. Eine derartige Dachbahn besitzt die Eigenschaft einer ausgezeichneten Brandschutzwirkung.
Nachteilig ist, daß unter extremen klimatischen Bedingungen die Bitumenhaftung der Deckschicht nicht ausreichend ist, so daß wegen der glatten Oberfläche der auf der Folie aufgebrachte Bitumen auf geneigten Dächern zum Abgleiten neigt.

Aus dem deutschen Gebrauchsmuster G 9101083 sind mehrschichtige Trägereinlagen bekannt, die aus mindestens einer textilen Schicht und mindestens einer Metallfolie bestehen. Diese mehrschichtige Trägereinlage wird durch Vernadelung der textilen Schicht mit der Metallfolie hergestellt, wobei die perforierte Fläche in der Metallfolie zwischen 8 bis 15 % der Grundfläche der Trägereinlage betragen darf. Die vorstehend beschriebene mehrschichtige Trägereinlage besitzt eine erhöhte Haftung für die Deckschicht (Bitumen), wobei die positiven Eigenschaften der bekannten Dachbahnen mit einer Verstärkung aus Vliesstoff und Metallfolie, speziell die der brandhemmenden Wirkungen und mechanischen Festigkeit beibehalten werden.

Aus der DE-OS 3 821 011 sind mehrschichtige Trägerbahnen bekannt, die zwei Schichten von textilen Flächengebilden und eine dazwischenliegende Metallschicht enthalten und sich zur Herstellung von Dach- und Abdeckbahnen eignen. Diese Trägerbahn enthält ein stärkeres textiles Flächengebilde als Tragschicht, eine damit verbundene Metallfolie und ein damit verbundenes schwächeres textiles Flächengebilde als Deckschicht. Die einzelnen Schichten werden entweder partiell oder vollflächig durch einen aufgebrachten Kleber miteinander verklebt, oder durch Nadeln miteinander verbunden. Diese mehrschichtige Trägerbahn besitzt zwar eine gute Bitumenhaftung, ist aber relativ aufwendig zu realisieren.

Zwar könnte erwartet werden, daß durch die Verwendung von Metallfolien in Dachbahnen das Eindringen von Pflanzenwurzeln verhindert werden kann, und daß daher die bekannten, aus einem Vliesstoff und einer Metallfolie bestehenden, bituminierten Dachbahnen die Eigenschaft der Wurzelfestigkeit aufweisen. Die Trägereinlagen dieser Dachbahnen werden üblicherweise durch Vernadeln des Vlieses mit der Metallfolie hergestellt.
Versuche haben nun gezeigt, daß die vorstehend beschriebenen mehrschichtigen Trägereinlagen nicht ausreichend wurzelfest sind, d. h. von Pflanzenwurzeln an den Durchstichstellen durchdrungen werden.
Soweit derartige bituminierte Dachbahnen aus mit Metallfolie verklebten Vliesen bestehen, sind sie zwar wurzelfest, neigen aber zum Delaminieren. Das Gleiche gilt für die aus der DE-OS 19 45 923 bekannten Verbundstoffe aus Vlies und Folie, die als Träger für Bitumen-Bahnen eingesetzt werden.

Gegenstand der vorliegenden Erfindung ist eine mehrschichtige Trägereinlage, enthaltend mindestens eine textile Schicht und mindestens eine Kupfereinlage, die durch Nadelung miteinander verbunden sind, und dadurch gekennzeichnet ist, daß die in der Kupfereinlage durch die Nadelung entstandenen Einstichlöcher einen Durchmesser von maximal 1 mm, vorzugsweise 0,1 bis 1 mm aufweisen, sowie ein Verfahren zu ihrer Herstellung.

Die in der erfindungsgemäßen Trägereinlage vorhandenen textilen Schichten können gewebt oder nicht gewebt sowie natürlichen oder synthetischen Ursprungs sein. Die textilen Schichten können Gewebe, Gelege, Gewirke oder vorzugsweise Vliesstoffe sein. Die Synthesefasern können entweder in Form von Stapelfasern oder in Form von Endlosfilamenten in den textilen Schichten der erfindungsgemäßen Trägereinlage enthalten sein. Bevorzugt sind solche Trägereinlagen, in denen mindestens eine textile Schicht aus einem Vliesstoff besteht, ganz besonders bevorzugt sind Vliesstoffe, die aus endlosen Filamenten, sogenannten Spunbonds, bestehen. Das Flächengewicht der textilen Schichten beträgt üblicherweise 80 bis 400 g/m². Bevorzugt werden textile Schichten mit einem Flächengewicht von 150 bis 300 g/m².

Als natürliche Fasermaterialien für die textilen Schichten kommen z. B. Cellulose, Jute, Baumwolle oder Mischungen dieser Fasern in Betracht. Die textilen Schichten bestehen bevorzugt aus synthetischen Fasermaterialien, wie z. B. Polyamiden, Polyvinylalkohol, Polyacrylnitril oder Polyestern. Bei den Synthesefasern werden bevorzugt Polyesterfasern verwendet, insbesondere Fasern aus Polyethylenterephthalat. Bevorzugte Polyethylenterephthalate sind beispielsweise in der DE-OS 3 821 011 beschrieben.

Als Kupfereinlage können alle handelsüblichen Typen von Kupferfolien, Kupfernetze, Kupfergewebe oder Kupfergeflechte verwendet werden, wobei die drei letztgenannten Einlagen eine lichte Maschenweite von maximal 1 mm, vorzugsweise 0,1 bis 1 mm nicht übersteigen darf und die sich durch gute Wärmeleitfähigkeitseigenschaften auszeichnen. Als bevorzugtes Material für die Kupfereinlage kommt eine Kupferfolie in Frage. Die Dicke der Kupferfolie beträgt üblicherweise zwischen 5 und 150 µm, vorzugsweise 10-30 µm, insbesondere bevorzugt 15-20 µm.
Als besonders bevorzugte Kupfereinlage eignet sich eine weichgeglühte Kupferfolie, die keinerlei Risse oder Poren aufweist und eine Dicke von 10-30 µm, vorzugsweise 15-20 µm besitzt. Insbesondere bevorzugt ist eine weichgeglühte Kupferfolie die neben den vorstehend beschriebenen Eigenschaften zusätzlich ein E-Modul von 100 bis 150 kN/mm² (gemessen bei 20°C) und eine Biegesteifigkeit von 30 bis 60 kN/mm² (gemessen bei 20°C) besitzt.
Des weiteren ist es von Vorteil, wenn die eingesetzte Kupferfolie eine Reinheit von 99,95 % und einen Sauerstoffgehalt von maximal 2 ppm (parts per million) aufweist.

Die Herstellung der erfindungsgemäßen Trägereinlage erfolgt in an sich bekannter Weise, indem aie Materialien der textilen Schichten und der Kupfereinlagen zusammengeführt und miteinander vernadelt werden, so daß sowohl die textilen Schichten als auch die Kupfereinlagen mit einer Durchlöcherung versehen sind, die von einer Nadelung mit dem Nadelstuhl stammt. Bei dem Vorgang des Nadelns werden die aufeinanderliegenden Schichten von der Vliesseite her durchstoßen. Der Abstand der Durchstichstellen wird so groß gewählt, daß der Zusammenhang der Kupfereinlage gewahrt bleibt. Die verwendeten Nadeln besitzen ein spitzes Ende und eine Anzahl von Haken, die gestaffelt um den Schaft der Nadel ausgebildet sind. Der Durchmesser der verwendeten Nadeln beträgt maximal 0,9 mm, bevorzugt zwischen 0,4 und 0,7 mm. Die Einstichtiefe während der Vernadelung liegt üblicherweise zwischen 8 und 15 mm. Dabei ziehen die Haken der Nadeln eine Anzahl von Fasern oder Filamenten der textilen Schicht durch die zunächst unversehrte Kupferoberfläche. Die Vernadelung erfolgt vorzugsweise mit 15 bis 75 Stichen/cm², besonders bevorzugt 20 bis 50 Stichen/cm² in einer solchen Weise, daß die Kupferfolie die Vernadelung als zusammenhängendes Flächengebilde übersteht.
In einer weiteren Ausführungsform erfolgt die Vernadelung in zwei aufeinanderfolgenden Vernadelungsstufen, wobei die jeweiligen Nadeldurchmesser und/oder Stichzahl/cm² voneinander verschieden sein können.

Der Vorgang des Nadelns führt unter anderem zu einer mechanischen Verfestigung der textilen Schichten.
Anschließend kann zusätzlich noch eine Verfestigung mit herkömmlichen Methoden auf thermische Weise, beispielsweise durch Verkleben der in der Hitze an ihrer Oberfläche weich gewordenen Fasern erfolgen.
Darüber hinaus kann die vernadelte Trägereinlage, nach Imprägnierung mit einem Bindemittel, mittels thermischer Nachbehandlung weiter Verfestigt werden. Geeignete Bindemittel sind z. B. Kunstharzdispersionen.

Diese thermisch Nachbehandelten mehrschichtigen Trägereinlagen zeichnen sich durch eine Oberfläche aus, bei der die auf den textilen Schichten befindlichen Kupfereinlagen Bereiche unterschiedlich starker Fältelungen aufweisen.

Die erfindungsgemäße mehrschichtige Trägereinlage kann auch als Sandwich-Anordnung, d.h. unter anderem in der Schichtfolge "textile Schicht - Kupfereinlage - textile Schicht" vorliegen oder als ein- oder beidseitig mit einer bituminösen Masse beschichtete wurzelfeste, bituminierte Dichtungsbahn.

Die bituminierten Dichtungsbahnen können z.B. als Dachbahnen oder zum Abdichten von Erdbecken und Deponien eingesetzt werden.
Ferner können die erfindungsgemäßen Trägereinlagen als solche oder nach einer Beschichtung, z.B. Bitumierung, zur Ableitung elektrostatischer Aufladungen eingesetzt werden und z.B. zum Schutz von Tankanlagen dienen.

### Beispiele:

### Beispiel 1

Ein Polyestervlies bestehend aus Polyesterfilamenten mit einem Titer von 4dtex und einem Flächengewicht von 210 g/m² und eine weichgeglühte Kupferfolie mit einer Dicke von 17 µm, einem E-Modul von 118 kN/mm² (gemessen bei 20°C) und einer Biegesteifigkeit von 44 kN/mm² (gemessen bei 20°C) wurden in einer ersten Vernadelungsstufe mit 27 Stichen/cm² vernadelt, wobei die Eindringtiefe der Nadeln 11 mm und der Nadeldurchmesser 0,53 mm betrug. Nachfolgend wurde in einer zweiten Vernadelungsstufe mit 21 Stichen/cm² vernadelt, wobei die Eindringtiefe der Nadeln 12 mm und der Nadeldurchmesser 0,68 mm betrug, so daß die Gesamtstichzahl bei 48 Stichen/cm² lag. Anschließend wurde die vernadelte Trägereinlage mit 23 Gew.-% Acrylatbinder [bezogen auf das Ausgangsgewicht des Vliesmaterials] imprägniert. Anschließend wurde die mit Binder imprägnierte mehrschichtige Trägereinlage einer thermischen Nachbehandlung bei 200°C unterworfen.

## Patentansprüche

1. Mehrschichtige Trägereinlage aus mindestens einer textilen Schicht und mindestens einer Kupfereinlage, die durch Nadelung miteinander verbunden sind, dadurch gekennzeichnet, daß die in der Kupfereinlage durch die Nadelung entstandenen Einstichlöcher einen Durchmesser von maximal 1 mm aufweisen und eine weichgeglühte Kupferfolie eingesetzt wird, deren E-Modul zwischen 100 und 150 kN/mm² (gemessen bei 20°C) und deren Biegesteifigkeit zwischen 30 und 60 kN/mm² (gemessen bei 20°C) beträgt.

2. Mehrschichtige Trägereinlage nach Anspruch 1, dadurch gekennzeichnet, daß die textile Schicht ein Flächengewicht von 80 bis 400 g/m², insbesondere von 150 bis 300 g/m², hat.

3. Mehrschichtige Trägereinlage nach einem der Ansprüche 1 oder 2, dadurch gekennzeichnet, daß mindestens eine textile Schicht eine Vliesstoffbahn ist.

4. Mehrschichtige Trägereinlage nach Anspruch 3, dadurch gekennzeichnet, daß die Vliesstoffbahn aus endlosen Filamenten besteht, deren Titer 3 bis 15 dtex betragen.

5. Mehrschichtige Trägereinlage nach Anspruch 3, dadurch gekennzeichnet, daß die Vliesstoffbahn aus Polyesterfasern oder -filamenten, insbesondere aus Polyethylenterephthalat, besteht.

6. Mehrschichtige Trägereinlage nach einem der Ansprüche 1 bis 5, dadurch gekennzeichnet, daß die Kupfereinlage mindestens eine Kupferfolie mit einer Dicke zwischen 5 und 150 µm ist.

7. Mehrschichtige Trägereinlage nach einem der Ansprüche 1 bis 6, dadurch gekennzeichnet, daß die Kupfereinlage mindestens eine Kupferfolie mit einer Dicke zwischen 10 und 30 µm ist.

8. Verfahren zur Herstellung der mehrschichtigen Trägereinlage gemäß Anspruch 1, umfassend die Maßnahmen:
a) Bereitstellen mindestens eines textilen Vlieses,
b) Bereitstellen mindestens einer Kupfereinlage,
c) Vernadelung der in a) und b) beschriebenen Materialien in einer solchen Weise, daß die resultierenden Einstichlöcher einen Durchmesser von maximal 1 mm, bevorzugt 0,1 bis 1 mm nicht übersteigen und die Kupfereinlage die vorstehend beschriebenen Maßnahmen als zusammmenhängendes Flächengebilde übersteht.

9. Verfahren gemäß Anspruch 8, dadurch gekennzeichnet, daß nach der Vernadelung (Maßnahme c) mit einem Bindemittel imprägniert und eine thermische Nachbehandlung durchgeführt wird.

10. Verwendung der mehrschichtigen Trägereinlage nach Anspruch 1 als wurzelfeste Trägereinlage, als Ausgangsmaterial zur Herstellung von bituminierten Dichtungsbahnen.

11. Verwendung der mehrschichtigen Trägereinlage nach Anspruch 1 und daraus hergestellter bituminierter Dichtungsbahnen zur Ableitung elektrostatischer Ladungen.

## Claims

1. A multilayered base layer comprising at least one textile layer and at least one copper layer which are joined together by needling, characterized in that the puncture holes produced in the copper layer by the needling have a diameter of not more than 1 mm and the annealed copper foil used has a modulus of elasticity between 100 and 150 kN/mm² (measured at 20°C) and a bending stiffness between 30 and 60 kN/mm² (measured at 20°C).

2. The multilayered base layer of claim 1, characterized in that the textile layer has a basis weight from 80 to 400 g/m², in particular from 150 to 300 g/m².

3. The multilayered base layer of either of claims 1 and 2, characterized in that at least one textile layer is a nonwoven web.

4. The multilayered base layer of claim 3, characterized in that the nonwoven web comprises continuous filaments whose linear density is from 3 to 15 dtex.

5. The multilayered base layer of claim 3, characterized in that the nonwoven web comprises polyester fibers or filaments, in particular polyethylene terephthalate.

6. The multilayered base layer of any one of claims 1 to 5, characterized in that the copper layer is at least one copper foil having a thickness between 5 and 150 µm.

7. The multilayered base layer of any one of claims 1 to 6, characterized in that the copper layer is at least one copper foil having a thickness between 10 and 30 µm.

8. A process for producing the multilayered base layer of claim 1, comprising the measures of:
a) providing at least one textile web,
b) providing at least one copper layer,
c) needling the materials described in a) and b) together in such a way that the resulting puncture holes do not exceed a diameter of at most 1 mm, preferably from 0.1 to 1 mm, and the copper layer survives the above-described measures as a continuous sheetlike structure.

9. The process of claim 8, characterized in that the needling (measure c) is followed by an impregnation with a binder and a thermal aftertreatment.

10. The use of the multilayered base layer of claim 1 as a root-resistant base layer as a starting material for producing bituminized sealing felts.

11. The use of the multilayered base layer of claim 1 and of bituminized sealing felts produced therefrom, for discharging electrostatic charges.

## Revendications

1. Matériau de support multicouche à base d'au moins une couche textile et d'au moins un insert en cuivre, qui sont mutuellement reliés par aiguilletage, caractérisé en ce que les perforations obtenues dans l'insert en cuivre par l'aiguilletage présentent un diamètre d'au maximum 1 mm et en ce qu'on met en oeuvre une feuille de cuivre soumise à un recuit dont le module d'élasticité est compris entre 100 et 150 kN/mm² (mesuré à 20°C) et la rigidité à la flexion est comprise entre 30 et 60 kN/mm² (mesurée à 20°C).

2. Matériau de support multicouche suivant la revendication 1, caractérisé en ce que la couche textile a une masse surfacique de 80 à 400 g/m², en particulier de 150 à 300 g/m².

3. Matériau de support multicouche suivant l'une des revendications 1 et 2, caractérisé en ce qu'au moins une couche textile est une bande de matière non tissée.

4. Matériau de support multicouche suivant la revendication 3, caractérisé en ce que la bande de matière non tissée est constituée de filaments sans fin dont le titre est de 3 à 15 dtex.

5. Matériau de support multicouche suivant la revendication 3, caractérisé en ce que la bande de matière non tissée est constituée de fibres ou de filaments de polyester, en particulier de téréphtalate de polyéthylène.

6. Matériau de support multicouche suivant l'une des revendications 1 à 5, caractérisé en ce que l'insert en cuivre est au moins une feuille de cuivre ayant une épaisseur comprise entre 5 et 150 µm.

7. Matériau de support multicouche suivant l'une des revendications 1 à 6, caractérisé en ce que l'insert en cuivre est au moins une feuille de cuivre ayant une épaisseur comprise entre 10 et 30 µm.

8. Procédé de fabrication du matériau de support multicouche suivant la revendication 1, comprenant les mesures suivantes :
a) tenir prêt au moins un non tissé textile,
b) tenir prêt au moins un insert en cuivre,
c) aiguilleter les matières décrites sous a) et b) de telle manière que les perforations résultantes ne dépassent pas un diamètre maximum de 1 mm, en étant de préférence de 0,1 à 1 mm, l'insert de cuivre supportant les mesures décrites précédemment sous la forme d'un produit manufacturé plan cohérent.

9. Procédé suivant la revendication 8, caractérisé en ce que, après l'aiguilletage (mesure c), on imprègne avec un liant et on effectue un traitement ultérieur thermique.

10. Utilisation du matériau de support multicouche suivant la revendication 1, en tant que matériau de support résistant aux racines, comme matière de départ pour la fabrication de bandes d'étanchéité revêtues de bitume.

11. Utilisation du matériau de support multicouche suivant la revendication 1 et de bandes d'étanchéité revêtues de bitume, fabriquées à partir de celui-ci, pour la dérivation de charges électrostatiques.
